# EUROPEAN PATENT SPECIFICATION

(11) **EP 4 379 330 B1**
(45) Date of publication and mention of the grant of the patent: **14.10.2026**
(21) Application number: 23212522.9
(22) Date of filing: 28.11.2023
(51) Int. Cl.: G01J 3/28, G01J 3/44, G01N 21/65, G01J 3/10, G01J 3/36, G01J 3/42, G01J 3/02, G01N 21/35

(54) **INFRARED RAMAN DEVICE**
INFRAROT-RAMAN-VORRICHTUNG
DISPOSITIF RAMAN INFRAROUGE

(30) Priority: 30.11.2022 JP 2022191431
(43) Date of publication of application: 05.06.2024
(73) Proprietor: Shimadzu Corporation, Nakagyo-ku, Kyoto-shi, Kyoto 604-8511 (JP)
(72) Inventor: TAO, Tomoyo, Kyoto-shi, Kyoto (JP); SASAYAMA, Tomoki, Kyoto-shi, Kyoto (JP); SHIBUTANI, Ryuta, Kyoto-shi, Kyoto (JP); OTAGURO, Atsuhiko, Kyoto-shi, Kyoto (JP); KATSUTANI, Fumiya, Kyoto-shi, Kyoto (JP)
(74) Representative: Müller-Boré & Partner Patentanwälte PartG mbB

(56) References cited:
- WO-A1-2014/008359
- JP-A- 2015 025 764
- US-A1- 2015 085 098
- ZHU SHICHAO ET AL: "Fusion of Near-Infrared and Raman Spectroscopy for In-Line Measurement of Component Content of Molten Polymer Blends", SENSORS, vol. 19, no. 16, 8 August 2019 (2019-08-08), CH, pages 3463, XP093145783, ISSN: 1424-8220, [retrieved on 20240327], DOI: 10.3390/s19163463
- STÜRZL NINETTE ET AL: "Simultaneous detection of Raman scattering and near-infrared photoluminescence in one imaging microscope", REVIEW OF SCIENTIFIC INSTRUMENTS, AMERICAN INSTITUTE OF PHYSICS, 2 HUNTINGTON QUADRANGLE, MELVILLE, NY 11747, vol. 83, no. 6, 2 June 2012 (2012-06-02), pages 63709 - 63709, XP012162398, ISSN: 0034-6748, [retrieved on 20120629], DOI: 10.1063/1.4731684

## Description

### CROSS REFERENCE TO RELATED APPLICATIONS

This nonprovisional application is based on Japanese Patent Application No. 2022-191431 filed on November 30, 2022 with the Japan Patent Office.

### BACKGROUND OF THE INVENTION

### Field of the Invention

The present disclosure relates to an infrared Raman device.

### Description of the Background Art

For example, WO 2013/132734 describes a device that switches and performs Raman measurement and infrared measurement on a sample.

JP 2015 025764 A describes a defect inspection apparatus using a Raman scattering microscope which allows a simplified and inexpensive configuration of apparatuses and can perform measurement for quality control of a carbon-based material such as graphene by a simple measuring method without requiring expertise.

### SUMMARY OF THE INVENTION

Some devices that switch and perform Raman measurement and infrared measurement on a sample may suffer from an increase in size around an objective optical system. In addition, such devices that switch and perform Raman measurement and infrared measurement on a sample may require positional adjustment of the sample in measurement mode switching.

The present disclosure has been made in view of the problems with the conventional technology as described above. More specifically, the present disclosure provides an infrared Raman device that is allowed to decrease in size around an objective optical system and perform measurement mode switching without having the position of a sample adjusted. The present invention is defined by the independent claim. Preferred examples are defined in the dependent claims.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1A is a schematic diagram of an infrared Raman device 100 at time of Raman measurement;
Fig. 1B is a schematic diagram of infrared Raman device 100 at time of first infrared measurement;
Fig. 2 is an enlarged schematic view of a region near a mirror 30 at the time of the first infrared measurement;
Fig. 3A is a schematic diagram of a first observation lens 42 for infrared measurement;
Fig. 3B is a schematic diagram illustrating that first infrared light L2 passes through first observation lens 42 for infrared measurement;
Fig. 4A is a schematic diagram of an infrared Raman device 200 at the time of the Raman measurement;
Fig. 4B is a schematic diagram of infrared Raman device 200 at the time of the first infrared measurement;
Fig. 5 is a schematic diagram of an infrared Raman device 100A at time of second infrared measurement;
Fig. 6A is a schematic diagram of a second observation lens 46 for infrared measurement; and
Fig. 6B is a schematic diagram illustrating that second infrared light L4 passes through second observation lens 46 for infrared measurement, a sample S, and first observation lens 42 for infrared measurement.

### DESCRIPTION OF THE PREFERRED EXAMPLES

Examples of the present disclosure will be described with reference to the drawings. In the following drawings, the same or corresponding portions will be denoted by the same reference numerals and duplicate description will not be repeated.

### (First Example)

An infrared Raman device (that will be referred to as "infrared Raman device 100" below) according to a first example will be described.

### <Configuration of Infrared Raman Device 100>

The following describes a configuration of infrared Raman device 100.

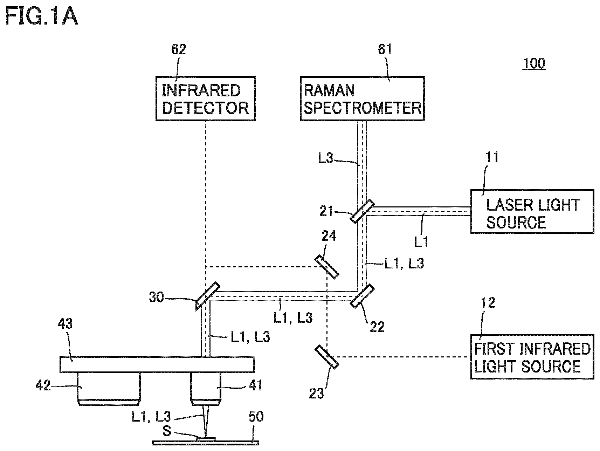

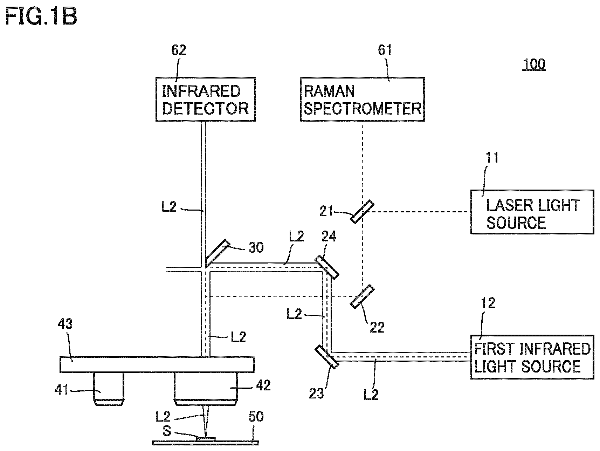

Fig. 1A is a schematic diagram of infrared Raman device 100 at the time of Raman measurement and Fig. 1B is a schematic diagram of infrared Raman device 100 at the time of first infrared measurement. As illustrated in Figs. 1A and 1B, infrared Raman device 100 includes a laser light source 11, a first infrared light source 12, a beam splitter 21, a mirror 22, a mirror 23, a mirror 24, a mirror 30, an objective lens 41 for Raman measurement, a first observation lens 42 for infrared measurement, a revolving nosepiece 43, a stage 50, a Raman spectrometer 61, and an infrared detector 62.

Laser light source 11 generates laser light L1. First infrared light source 12 generates first infrared light L2. Infrared Raman device 100 is capable of switching and performing Raman measurement and first infrared measurement. Laser light L1 is used in the Raman measurement. First infrared light L2 is used in the first infrared measurement.

Objective lens 41 for Raman measurement and first observation lens 42 for infrared measurement are attached to revolving nosepiece 43. It is possible to switch objective lens 41 for Raman measurement and first observation lens 42 for infrared measurement by revolving revolving nosepiece 43. More specifically, revolving revolving nosepiece 43 at the time of first infrared measurement causes the optical axis of first observation lens 42 for infrared measurement to coincide with the optical axis of obj ective lens 41 for Raman measurement at the time of Raman measurement. Sample S is positioned on the optical axis of objective lens 41 for Raman measurement at the time of Raman measurement and the optical axis of first observation lens 42 for infrared measurement at the time of first infrared measurement. It is to be noted that sample S is disposed on stage 50.

Laser light L1 generated by laser light source 11 is reflected by beam splitter 21. Laser light L1 reflected by beam splitter 21 is reflected by mirror 22. First infrared light L2 generated by first infrared light source 12 is reflected by mirror 23. First infrared light L2 reflected by mirror 23 is reflected by mirror 24.

The position of mirror 30 is movable. Mirror 30 is, for example, an edge mirror. At the time of Raman measurement, mirror 30 is moved to a position at which the whole of laser light L1 reflected by mirror 22 is reflected. This causes laser light L1 reflected by mirror 30 to pass through objective lens 41 for Raman measurement. Laser light L1 passing through objective lens 41 for Raman measurement is condensed and radiated to sample S. The radiation of laser light L1 causes sample S to generate Raman light L3.

Raman light L3 generated from sample S passes through objective lens 41 for Raman measurement. The whole of Raman light L3 that is collimated by passing through objective lens 41 for Raman measurement is reflected by mirror 30. Raman light L3 reflected by mirror 30 is reflected by mirror 22. Raman light L3 reflected by mirror 22 passes through beam splitter 21. Raman light L3 passing through beam splitter 21 enters Raman spectrometer 61. This causes Raman spectrometer 61 to perform Raman measurement.

At the time of first infrared measurement, objective lens 41 for Raman measurement is switched to first observation lens 42 for infrared measurement by revolving revolving nosepiece 43. In addition, the position of mirror 30 is moved at the time of first infrared measurement. More specifically, at the time of first infrared measurement, mirror 30 is moved to a position at which a portion of first infrared light L2 reflected by mirror 24 is reflected. This causes first infrared light L2 reflected by mirror 30 to pass through first observation lens 42 for infrared measurement. First infrared light L2 passing through first observation lens 42 for infrared measurement is condensed and radiated to sample S.

First infrared light L2 reflected by sample S passes through first observation lens 42 for infrared measurement. First infrared light L2 that is collimated by passing through first observation lens 42 for infrared measurement passes through mirror 30. In other words, first infrared light L2 that is reflected by sample S and passes through first observation lens 42 for infrared measurement is not reflected by mirror 30. First infrared light L2 passing through mirror 30 enters infrared detector 62. This causes infrared detector 62 to perform first infrared measurement.

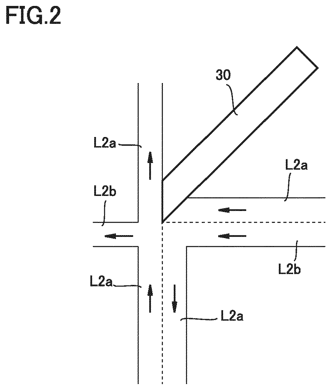

Fig. 2 is an enlarged schematic view of a region near mirror 30 at the time of the first infrared measurement. As illustrated in Fig. 2, first infrared light L2 reflected by mirror 24 has a first portion L2a and a second portion L2b. First portion L2a is reflected by mirror 30, but second portion L2b passes through mirror 30 instead of being reflected by mirror 30. It is to be noted that second portion L2b passing through mirror 30 is absorbed by an appropriate method though not illustrated. This prevents second portion L2b from being stray light.

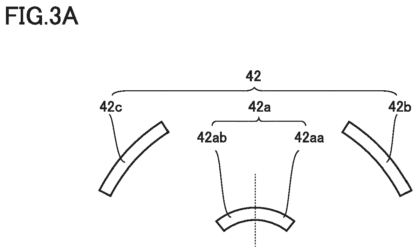

Fig. 3A is a schematic diagram of first observation lens 42 for infrared measurement. As illustrated in Fig. 3A, first observation lens 42 for infrared measurement includes an aspherical mirror 42a and spherical mirrors 42b and 42c. Spherical mirror 42b is disposed to be symmetrical to spherical mirror 42c with respect to the position of the middle (see the dotted line in Fig. 3A) of aspherical mirror 42a in the direction orthogonal to the optical axis of first observation lens 42 for infrared measurement.

Aspherical mirror 42a has a first portion 42aa and a second portion 42ab. First portion 42aa is closer to spherical mirror 42b than the position of the middle of aspherical mirror 42a in the direction orthogonal to the optical axis of first observation lens 42 for infrared measurement. Second portion 42ab is closer to spherical mirror 42c than the position of the middle of aspherical mirror 42a in the direction orthogonal to the optical axis of first observation lens 42 for infrared measurement.

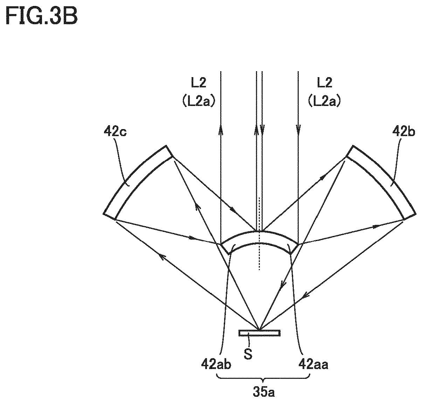

Fig. 3B is a schematic diagram illustrating that first infrared light L2 passes through first observation lens 42 for infrared measurement. As illustrated in Fig. 3B, first infrared light L2 (first portion L2a) entering first observation lens 42 for infrared measurement is reflected by only first portion 42aa. First infrared light L2 reflected by first portion 42aa is reflected by spherical mirror 42b to be condensed on sample S. First infrared light L2 reflected by sample S is sequentially reflected and collimated by spherical mirror 42c and second portion 42ab. In this way, first infrared light L2 reflected by second portion 42ab passes through an optical path different from that of first infrared light L2 that enters first observation lens 42 for infrared measurement. First infrared light L2 that is reflected by sample S and passes through first observation lens 42 for infrared measurement thus passes through mirror 30 instead of being reflected by mirror 30.

### <Effect of Infrared Raman Device 100>

The following describes an effect of infrared Raman device 100 in comparison with that of an infrared Raman device (that will be referred to as "infrared Raman device 200" below) according to a comparative example.

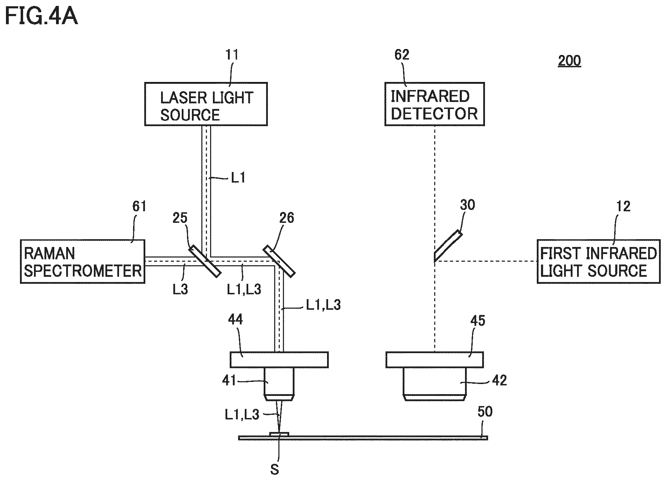

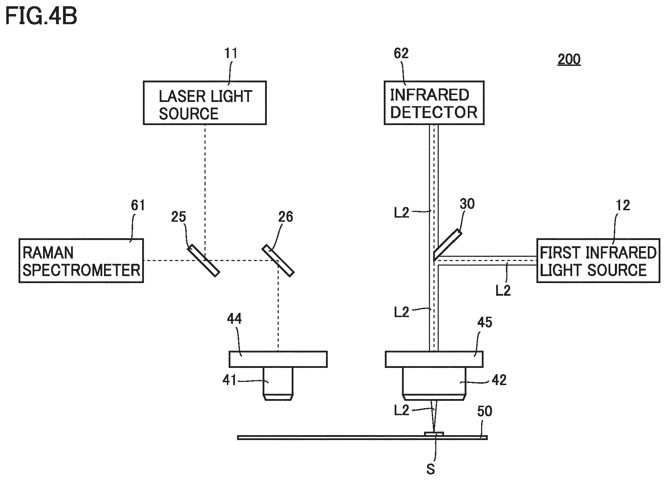

Fig. 4A is a schematic diagram of infrared Raman device 200 at the time of Raman measurement and Fig. 4B is a schematic diagram of infrared Raman device 200 at the time of first infrared measurement. As illustrated in Figs. 4A and 4B, infrared Raman device 200 includes laser light source 11, first infrared light source 12, a beam splitter 25, a mirror 26, mirror 30, objective lens 41 for Raman measurement, first observation lens 42 for infrared measurement, a revolving nosepiece 44, a revolving nosepiece 45, stage 50, Raman spectrometer 61, and infrared detector 62. Infrared Raman device 200 is capable of switching and performing Raman measurement and first infrared measurement.

In infrared Raman device 200, laser light L1 generated by laser light source 11 is sequentially reflected by beam splitter 25 and mirror 26, passes through objective lens 41 for Raman measurement, and radiated to sample S at the time of Raman measurement. In infrared Raman device 200, Raman light L3 generated from sample S passes through objective lens 41 for Raman measurement, is reflected by mirror 26, and then passes through beam splitter 25 to enter Raman spectrometer 61 at the time of Raman measurement.

In infrared Raman device 200, first infrared light L2 generated by first infrared light source 12 is partially reflected by mirror 30 and first infrared light L2 reflected by mirror 30, passes through first observation lens 42 for infrared measurement, and radiated to sample S at the time of first infrared measurement. In infrared Raman device 200, first infrared light L2 reflected by sample S sequentially passes through first observation lens 42 for infrared measurement and mirror 30 to enter infrared detector 62 at the time of first infrared measurement. In this way, mirror 30 is used in infrared Raman device 200 only at the time of first infrared measurement.

In infrared Raman device 200, objective lens 41 for Raman measurement and first observation lens 42 for infrared measurement are respectively attached to revolving nosepiece 44 and revolving nosepiece 45. The optical axis of objective lens 41 for Raman measurement at the time of Raman measurement does not thus coincide with the optical axis of first observation lens 42 for infrared measurement at the time of first infrared measurement. This makes it necessary to adjust the position of sample S at the time of Raman measurement and at the time of first infrared measurement. In addition, mirror 30 is used in infrared Raman device 200 only at the time of first infrared measurement. A different mirror (mirror 26) is used around the objective optical system at the time of Raman measurement. This causes an increase in size around the objective optical system.

In contrast, objective lens 41 for Raman measurement and first observation lens 42 for infrared measurement are attached to one revolving nosepiece (revolving nosepiece 43) in infrared Raman device 100. Revolving the one revolving nosepiece makes it possible to cause the optical axis of first observation lens 42 for infrared measurement at the time of first infrared measurement to coincide with the optical axis of obj ective lens 41 for Raman measurement at the time of Raman measurement. This makes it unnecessary to adjust the position of sample S at the time of Raman measurement and at the time of first infrared measurement. In addition, mirror 30 is used in infrared Raman device 100 both at the time of Raman measurement and at the time of first infrared measurement. This allows for a decrease in size around the objective optical system.

### (Second Example)

An infrared Raman device (that will be referred to as "infrared Raman device 100A" below) according to a second example will be described. A difference from infrared Raman device 100 will be chiefly described here and duplicate description will not be repeated.

### <Configuration of Infrared Raman Device 100A>

The following describes a configuration of infrared Raman device 100A.

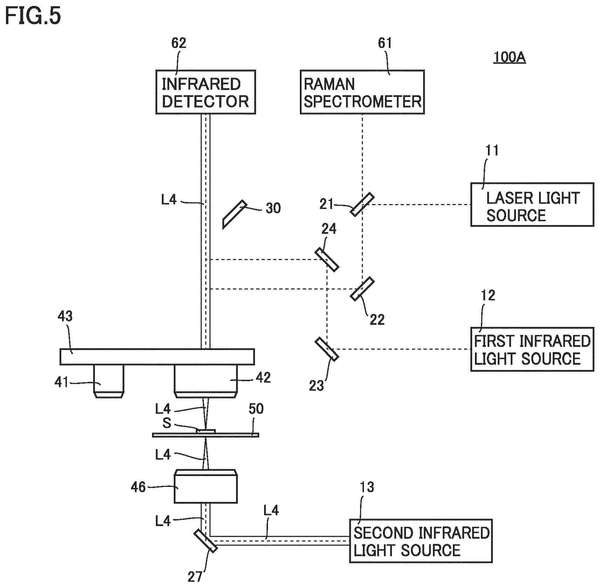

Fig. 5 is a schematic diagram of infrared Raman device 100A at the time of second infrared measurement. As illustrated in Fig. 5, infrared Raman device 100A includes laser light source 11, first infrared light source 12, beam splitter 21, mirror 22, mirror 23, mirror 24, mirror 30, objective lens 41 for Raman measurement, first observation lens 42 for infrared measurement, revolving nosepiece 43, stage 50, Raman spectrometer 61, and infrared detector 62. In this respect, the configuration of infrared Raman device 100A is the same as the configuration of infrared Raman device 100.

Infrared Raman device 100A is capable of switching and performing not only Raman measurement and first infrared measurement, but also second infrared measurement in which second infrared light L4 is used. Infrared Raman device 100A further includes a second infrared light source 13, a mirror 27, and a second observation lens 46 for infrared measurement.

Second infrared light source 13 generates second infrared light L4. Second infrared light L4 generated by second infrared light source 13 is reflected by mirror 27. In infrared Raman device 100A, revolving nosepiece 43 is revolved at the time of second infrared measurement to cause the optical axis of first observation lens 42 for infrared measurement to coincide with the optical axis of objective lens 41 for Raman measurement at the time of Raman measurement. At the time of second infrared measurement, the optical axis of second observation lens 46 for infrared measurement coincides with the optical axis of first observation lens 42 for infrared measurement.

Second infrared light L4 reflected by mirror 27 passes through second observation lens 46 for infrared measurement and is condensed and radiated to sample S. At this time, second infrared light L4 passes through stage 50. Second infrared light L4 passing through sample S is collimated by passing through first observation lens 42 for infrared measurement.

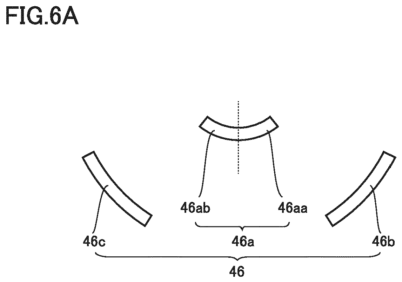

Fig. 6A is a schematic diagram of second observation lens 46 for infrared measurement. As illustrated in Fig. 6A, second observation lens 46 for infrared measurement includes an aspherical mirror 46a and spherical mirrors 46b and 46c. Spherical mirror 46b is disposed to be symmetrical to spherical mirror 46c with respect to the position of the middle (see the dotted line in Fig. 6A) of aspherical mirror 46a in the direction orthogonal to the optical axis of second observation lens 46 for infrared measurement.

Aspherical mirror 46a has a first portion 46aa and a second portion 46ab. First portion 46aa is closer to spherical mirror 46b than the position of the middle of aspherical mirror 46a in the direction orthogonal to the optical axis of second observation lens 46 for infrared measurement. Second portion 46ab is closer to spherical mirror 46c than the position of the middle of aspherical mirror 46a in the direction orthogonal to the optical axis of second observation lens 46 for infrared measurement.

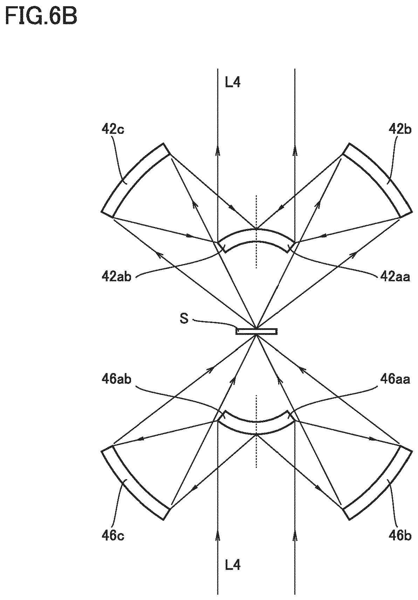

Fig. 6B is a schematic diagram illustrating that second infrared light L4 passes through second observation lens 46 for infrared measurement, sample S, and first observation lens 42 for infrared measurement. As illustrated in Fig. 6B, a portion of second infrared light L4 entering second observation lens 46 for infrared measurement is reflected by first portion 46aa and further reflected by spherical mirror 46b. Another portion of second infrared light L4 entering second observation lens 46 for infrared measurement is reflected by second portion 46ab and further reflected by spherical mirror 46c. This condenses second infrared light L4 and second infrared light L4 is then radiated to sample S. A portion of second infrared light L4 passing through sample S is sequentially reflected by spherical mirror 42b and first portion 42aa. Similarly, another portion of second infrared light L4 passing through sample S is sequentially reflected by spherical mirror 42c and second portion 42ab. This causes second infrared light L4 passing through sample S to be collimated by passing through first observation lens 42 for infrared measurement.

As illustrated in Fig. 5, second infrared light L4 passing through first observation lens 42 for infrared measurement enters infrared detector 62. This causes infrared detector 62 to perform second infrared measurement. At the time of second infrared measurement, mirror 30 is detached from the optical path of second infrared light L4 passing through first observation lens 42 for infrared measurement. This prevents mirror 30 from influencing second infrared light L4 passing through first observation lens 42 for infrared measurement. In these respects, the configuration of infrared Raman device 100A is different from the configuration of infrared Raman device 100.

### <Effect of Infrared Raman Device 100A>

The following describes an effect of infrared Raman device 100A.

In infrared Raman device 100A, the optical axis of second observation lens 46 for infrared measurement coincides with the optical axis of objective lens 41 for Raman measurement at the time of Raman measurement and the optical axis of first observation lens 42 for infrared measurement at the time of first infrared measurement. It is thus unnecessary in infrared Raman device 100A to adjust the position of sample S in switching Raman measurement or first infrared measurement to second infrared measurement. In addition, infrared Raman device 100A does not request an objective optical system for second infrared observation other than second observation lens 46 for infrared measurement. This allows for a decrease in size around the objective optical system even when it is possible to switch and perform not only Raman measurement and first infrared measurement, but also second infrared measurement in which second infrared light L4 is used.

## Claims

1. An infrared Raman device (100, 100A) capable of switching and performing Raman measurement and first infrared measurement on a sample (S), the infrared Raman device comprising:
an objective lens for Raman measurement (41);
a first observation lens for infrared measurement (42);
a laser light source (11) that generates laser light (L1);
a first infrared light source (12) that generates first infrared light (L2); and
a mirror (30), wherein
the mirror is configured to be moved between a first position and a second position, wherein the first position is different from the second position, wherein in the first position, at the time of the Raman measurement, the mirror reflects the laser light to cause the laser light to pass through the objective lens for Raman measurement and reflects Raman light (L3) generated from the sample by the laser light that passes through the objective lens for Raman measurement and is radiated to the sample, the Raman light passing back through the objective lens for Raman measurement,
the first observation lens for infrared measurement is switched from the objective lens for Raman measurement and is used at the time of the first infrared measurement to cause an optical axis of the first observation lens for infrared measurement to coincide with an optical axis of the objective lens for Raman measurement at the time of the Raman measurement,
wherein in the second position, at the time of the first infrared measurement, the mirror partially reflects the first infrared light to cause the first infrared light to pass through the first observation lens for infrared measurement and transmits the first infrared light that is reflected by the sample after passing through the first observation lens for infrared measurement and passes through the first observation lens for infrared measurement again, and
the first observation lens for infrared measurement is configured to extract from the first infrared light reflected by the sample a portion passing on a first optical path, the first optical path being different from and adjacent to a second optical path on which the first infrared light reflected by the mirror passes.

2. The infrared Raman device according to claim 1, further comprising a revolving nosepiece (43), wherein
the objective lens for Raman measurement and the first observation lens for infrared measurement are attached to the revolving nosepiece, and
the objective lens for Raman measurement is switched to the first observation lens for infrared measurement at the time of the first infrared measurement by revolving the revolving nosepiece to cause the optical axis of the first observation lens for infrared measurement to coincide with the optical axis of the objective lens for Raman measurement at the time of the Raman measurement and the first observation lens for infrared measurement is used.

3. The infrared Raman device according to claim 1, wherein
the infrared Raman device is capable of further performing second infrared measurement on the sample by switching to the second infrared measurement,
the infrared Raman device further comprises
a second observation lens for infrared measurement (46), and
a second infrared light source (13) that generates second infrared light (L4),
an optical axis of the second observation lens for infrared measurement coincides with the optical axis of the first observation lens for infrared measurement at the time of the first infrared measurement, and
the mirror is detached at time of the second infrared measurement from an optical path of the second infrared light that sequentially passes through the second observation lens for infrared measurement, the sample, and the first observation lens for infrared measurement.

4. The infrared Raman device according to any one of claims 1 to 3, wherein the mirror is an edge mirror.

## Patentansprüche

1. Eine Infrarot-Raman-Vorrichtung (100, 100A), die in der Lage ist, zwischen einer Raman-Messung und einer ersten Infrarotmessung an einer Probe (S) umzuschalten und diese durchzuführen, wobei die Infrarot-Raman-Vorrichtung Folgendes umfasst:
ein Objektiv für die Raman-Messung (41);
eine erste Beobachtungslinse für die Infrarotmessung (42);
eine Laserlichtquelle (11), die Laserlicht (L1) erzeugt;
eine erste Infrarotlichtquelle (12), die erstes Infrarotlicht (L2) erzeugt; und
einen Spiegel (30), wobei
der Spiegel dazu konfiguriert ist, zwischen einer ersten Position und einer zweiten Position bewegt zu werden, wobei sich die erste Position von der zweiten Position unterscheidet, wobei der Spiegel in der ersten Position zum Zeitpunkt der Raman-Messung das Laserlicht so reflektiert, dass das Laserlicht durch das Objektiv für die Raman-Messung hindurchtritt, und das Raman-Licht (L3) reflektiert, das von der Probe durch das Laserlicht erzeugt wird, das durch das Objektiv für die Raman-Messung hindurchtritt und auf die Probe gestrahlt wird, wobei das Raman-Licht zurück durch das Objektiv für die Raman-Messung fällt,
die erste Beobachtungslinse für die Infrarotmessung anstelle des Objektivs für die Raman-Messung geschaltet und zum Zeitpunkt der ersten Infrarotmessung verwendet wird, um zu bewirken, dass eine optische Achse der ersten Beobachtungslinse für die Infrarotmessung mit einer optischen Achse des Objektivs für die Raman-Messung zum Zeitpunkt der Raman-Messung zusammenfällt,
wobei der Spiegel in der zweiten Position zum Zeitpunkt der ersten Infrarotmessung das erste Infrarotlicht teilweise reflektiert, um zu bewirken, dass das erste Infrarotlicht durch die erste Beobachtungslinse für die Infrarotmessung hindurchtritt, und das erste Infrarotlicht transmittiert, das von der Probe reflektiert wird, nachdem es durch die erste Beobachtungslinse für die Infrarotmessung hindurchgetreten ist, und erneut durch die erste Beobachtungslinse für die Infrarotmessung hindurchtritt, transmittiert, und wobei
die erste Beobachtungslinse für die Infrarotmessung dazu konfiguriert ist, um aus dem von der Probe reflektierten ersten Infrarotlicht einen Teil zu extrahieren, der auf einem ersten optischen Weg verläuft, wobei sich der erste optische Weg von einem zweiten optischen Weg unterscheidet, auf dem das vom Spiegel reflektierte erste Infrarotlicht verläuft, und diesem benachbart ist.

2. Die Infrarot-Raman-Vorrichtung nach Anspruch 1, ferner umfassend einen drehbaren Objektivrevolver (43), wobei
das Objektiv für die Raman-Messung und die erste Beobachtungslinse für die Infrarotmessung am drehbaren Objektivrevolver angebracht sind, und wobei
das Objektiv für die Raman-Messung zum Zeitpunkt der ersten Infrarotmessung durch Drehen des drehbaren Objektivrevolvers auf die erste Beobachtungslinse für die Infrarotmessung umgeschaltet wird, um zu bewirken, dass die optische Achse der ersten Beobachtungslinse für die Infrarotmessung mit der optischen Achse des Objektivs für die Raman-Messung zum Zeitpunkt der Raman-Messung zusammenfällt, und die erste Beobachtungslinse für die Infrarotmessung verwendet wird.

3. Die Infrarot-Raman-Vorrichtung nach Anspruch 1, wobei
die Infrarot-Raman-Vorrichtung in der Lage ist, eine zweite Infrarotmessung an der Probe durchzuführen, indem auf die zweite Infrarotmessung umgeschaltet wird,
wobei die Infrarot-Raman-Vorrichtung ferner Folgendes umfasst:
eine zweite Beobachtungslinse für die Infrarotmessung (46), und
eine zweite Infrarotlichtquelle (13), die zweites Infrarotlicht (L4) erzeugt,
die optische Achse der zweiten Beobachtungslinse für die Infrarotmessung zum Zeitpunkt der ersten Infrarotmessung mit der optischen Achse der ersten Beobachtungslinse für die Infrarotmessung zusammenfällt, und wobei
der Spiegel zum Zeitpunkt der zweiten Infrarotmessung aus einem optischen Weg des zweiten Infrarotlichts entfernt ist, das sequenziell durch die zweite Beobachtungslinse für die Infrarotmessung, die Probe und die erste Beobachtungslinse für die Infrarotmessung hindurchtritt.

4. Die Infrarot-Raman-Vorrichtung nach irgendeinem der Ansprüche von 1 bis 3, wobei der Spiegel ein Kantenspiegel ist.

## Revendications

1. Un dispositif Raman infrarouge (100, 100A) capable de commuter entre une mesure Raman et une première mesure infrarouge et d'effectuer ces mesures sur un échantillon (S), le dispositif Raman infrarouge comprenant :
un objectif de mesure Raman (41) ;
une première lentille d'observation pour la mesure infrarouge (42) ;
une source de lumière laser (11) qui génère une lumière laser (L1) ;
une première source de lumière infrarouge (12) qui génère une première lumière infrarouge (L2) ; et
un miroir (30), sachant que
le miroir est configuré pour être déplacé entre une première position et une deuxième position, sachant que la première position est différente de la deuxième position, sachant que dans la première position, au moment de la mesure Raman, le miroir réfléchit la lumière laser pour amener la lumière laser à traverser l'objectif de mesure Raman, et réfléchit une lumière Raman (L3) générée à partir de l'échantillon à par la lumière laser qui traverse l'objectif de mesure Raman et est rayonnée sur l'échantillon, la lumière Raman repassant à travers l'objectif de mesure Raman,
la première lentille d'observation pour la mesure infrarouge est commutée à la place de l'objectif de mesure Raman et est utilisée au moment de la première mesure infrarouge pour amener un axe optique de la première lentille d'observation pour la mesure infrarouge à coïncider avec l'axe optique de l'objectif de mesure Raman au moment de la mesure Raman,
sachant que, dans la deuxième position, au moment de la première mesure infrarouge, le miroir réfléchit partiellement la première lumière infrarouge pour amener la première lumière infrarouge à traverser la première lentille d'observation pour la mesure infrarouge, et transmet la première lumière infrarouge qui est réfléchie par l'échantillon après avoir traversé la première lentille d'observation pour la mesure infrarouge et traverse à nouveau la première lentille d'observation pour la mesure infrarouge, et que
la première lentille d'observation pour la mesure infrarouge est configurée pour extraire de la première lumière infrarouge réfléchie par l'échantillon une partie passant sur un premier chemin optique, le premier chemin optique étant différent d'un second chemin optique, adjacent à celui-ci, sur lequel passe la première lumière infrarouge réfléchie par le miroir.

2. Le dispositif Raman infrarouge d'après la revendication 1, comprenant en outre un revolver porte-objectifs (43), sachant que
l'objectif de mesure Raman et la première lentille d'observation pour la mesure infrarouge sont fixés au revolver porte-objectifs, et
l'objectif de mesure Raman est remplacée par la première lentille d'observation pour la mesure infrarouge au moment de la première mesure infrarouge en faisant tourner le revolver porte-objectifs pour amener l'axe optique de la première lentille d'observation pour la mesure infrarouge à coïncider avec l'axe optique de l'objectif de mesure Raman au moment de la mesure Raman, et la première lentille d'observation pour la mesure infrarouge est utilisée.

3. Le dispositif Raman infrarouge d'après la revendication 1, sachant que
le dispositif Raman infrarouge est capable d'effectuer en outre une deuxième mesure infrarouge sur l'échantillon en commutant vers la deuxième mesure infrarouge,
le dispositif Raman infrarouge comprenant en outre :
une deuxième lentille d'observation pour la mesure infrarouge (46), et
une deuxième source de lumière infrarouge (13) qui génère une deuxième lumière infrarouge (L4),
un axe optique de la deuxième lentille d'observation pour la mesure infrarouge coïncide avec l'axe optique de la première lentille d'observation pour la mesure infrarouge au moment de la première mesure infrarouge, et que
le miroir est retiré, au moment de la deuxième mesure infrarouge, d'un chemin optique de la deuxième lumière infrarouge qui traverse successivement la deuxième lentille d'observation pour la mesure infrarouge, l'échantillon et la première lentille d'observation pour la mesure infrarouge.

4. Le dispositif Raman infrarouge d'après l'une quelconque des revendications 1 à 3, sachant que le miroir est un miroir de bord.
